# EUROPEAN PATENT SPECIFICATION

(11) **EP 1 338 813 B1**
(45) Date of publication and mention of the grant of the patent: **08.11.2006**
(21) Application number: 02004147.1
(22) Date of filing: 25.02.2002
(51) Int. Cl.: F16D 1/112, B62D 1/20

(54) **Shaft coupling, preferably screw-less steering shaft coupling**
Kupplung, vorzugsweise Kupplung einer Kraftfahrzeug- Lenksäulenwelle ohne Schrauben
Accouplement, de préférence accouplement d'arbre de direction de véhicule automobile sans vis

(43) Date of publication of application: 27.08.2003
(73) Proprietor: Ford Global Technologies, Inc., Dearborn, MI 48126 (US)
(72) Inventor: Nyman, Markus, 41453 Göteborg (SE); Mogren, Lars, 41276 Göteborg (SE); Petersson, Mathias, 44372 Grabo (SE); Bergkvist, Lars, 41842 Göteborg (SE); Svensson, Andreas, 41230 Göteborg (SE)
(74) Representative: Karlsson, Leif Karl Gunnar

(56) References cited:
- EP-A- 0 300 854
- GB-A- 2 270 054
- US-A- 4 124 318

## Description

### Field of the invention

The present invention relates to a shaft coupling, preferably a steering shaft coupling. More in detail the invention relates to an improved coupling between a first shaft section and a second shaft section, as stated in the preamble of claim 1.

### State of the Art

When nowadays assembling vehicles like a car it is for competitive reasons more critical than ever to be able to do so within a minimum amount of hours.
Simultaneously the building density of cars has during the last ten or so years been driven to its outer limits for reasons of capability of carrying a vast amount of features in spite of a more and more limited outer format.
Thus some assembling operations become difficult and time consuming to perform in such limited time whilst all previous requirements concerning quality, function, performance and of course safety are features that are musts to be upheld.
Under these circumstances the use of conventional fastening means such as screws or nuts, as is the case, is complicated and time consuming, while such use also require at least one time consuming and of course thereby costly control station in the assembly process to really check that nothing has been overlooked in previous asse bly stages.

A prior art construction, as disclosed in patent publication GB-A-2 270 054, shows a connector (12) adapted to connect a steering column (10) to a steering gear.

This connector (12) comprises a first yoke (20), secured to a steering column (10) and a second yoke (22), connected to a shaft (14) of a control valve (16) related to a steering mechanism.

Connecting means (28, 30, 32, 34, 46) are provided for a snap-fit of the second yoke (22) onto the shaft (14) of the control valve (16) and restraining means, as splines (48), are provided for restraining the second yoke (22) from rotating relative to the shaft (14).

This restraining means is including a lash adjuster (34), coupled to the shaft (14), and cooperable with the second yoke (22) for substantially eliminating lash in the connector (12).

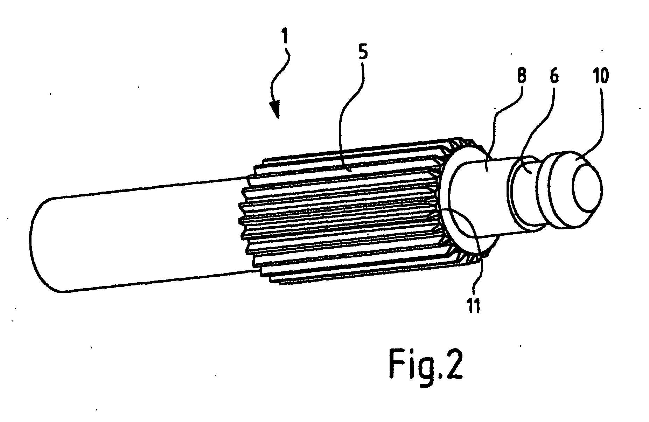

In Figure 2 it is clearly shown that the splines, related to the shaft (14), are divided into two sections, one longer section, surrounded by a coil spring arrangement (36), and a shorter section (50).

A clip (36), a retaining ring (28), a delashing element (34) and a further clip (42) are assembled onto the shaft (14) before the control valve (16) is fitted to the vehicle.

More precisely it is here suggested that, before fitting the steering column to the vehicle, the yoke (20), via a universal joint (18), is fixed to the steering column.

Once this is done the steering column (10) is then fitted to the vehicle, in the process of which the body portion (32) is aligned with the delashing element (34) so that their respective splines mates.

The body portion (32) is then urged over the ring (28), at which time the bevelled edge begins to compress the ring (28).

As the body portion reaches the top of the shaft (14) it is aligned with the splines of the shaft (14) and, on application of a further force, is compressed fully to fit within the body portion (32). During this time the coil spring arrangement (36) begins to be compressed.

As soon as the ring (28) becomes aligned with a channel (30) it expands to its normal diameter so as to lie partly in a first channel (30) and partly in a second channel, the latter formed on the shaft (14). This causes the ring (28) to lock the yoke (22) to the shaft (14).

**GB-A-2 270 054** discloses further a snap fit steering column connection, having an external spring for axially biasing the joint.

Because the biasing spring is mounted externally of the joint, the device of this patent will require an additional retention ring and spring, both of which are subject to corrosion and loss of structure integrity because of their exterior mounting and both of which present cost over and above that required by the present inventive coupling.

The construction, shown and described in the patent publication **EP-A1-0 300 854**, also gives advise of a shaft (3) having splines (20) divided into two sections (an upper section 3') and where these sections are interrelated by an elastic ring arrangement (22).

The section (3') and the ring arrangement (22) are adapted to be pressed through splines in a hole (20) of a yoke (8).

**EP-A1-0 300 854** discloses an axially engageable steering coupling having a snap ring retainer but no axially biasing structure.

The coupling of this patent will thus be prone to unwanted vibration caused by unwanted axial movement.

### Description of the invention

Therefore it is an object with the present invention to achieve a solution that makes it easier and quicker to assemble a steering shaft to a steering gear while necessary aspects relating to quality, function, performance and safety, well conserved in previous solutions, are retained.

Another object with the present invention is to present a safe, easy to assemble and disassemble arrangement, which also is suitable for an automated assembly process.

Yet another object with the invention is to eliminate or dampen such play and thus unwanted noise that always will occur in an assembly made by splines, which is manufactured to industrial standards.

According to the present invention one of either the first or the second shaft, i.e. the one having an outer serration (male portion), in a portion thereof to be inserted in the mating inner serration (female portion) is provided with a groove for the fitting of a radially elastical locking arrangement for upon insertion of said male portion into the female portion, co-operation with a corresponding circumferentially extending groove or shoulder arranged in the latter.
Due to the small number of parts comprised in the coupling quick and easy assembly is achieved, which also makes it suitable and easy to implement in an automated assembly station.

In a further developed embodiment of the invention said groove for a locking ring is located in a diameter reduced foremost end of said male portion. Due to the fact that thereby no torque is transferred through the part of the shaft where the shafts are kept together, the thickness of material of said foremost end may be of a smaller dimension, which except for saving weight also makes assembly easier.

By also providing the very foremost end of the male portion with a chamfered top, assembly is to an even greater extent made easier in that the initial insertion of the male portion may be made with less exactness.

Due to the location of a dampening rubber ring between an axial fixation of the joint and the splines or serration of its torque transmitting coupling, the elements of the coupling to a large extent becomes isolated from vibrations carried over from other components of its implement, for instance a car.
Further objects of the invention are various from the claims.

### Brief description of the drawings

Below the invention is described more in detail with reference to accompanying drawings illustrating a preferred embodiment of the invention, and in which,
Fig 1 shows as an exploded in part cut view in consecutive order all parts constituting a steering shaft coupling according to the invention,
Fig 2 shows in a perspective view and as a separate element a male portion of said coupling,
Fig 3, again as a separate element in a cut slight perspective view shows a corresponding female portion of said coupling,
Fig 4 shows a perspective view of an elastic element being used as a biasing means between the male and female portion respectively,
Fig 5 shows a perspective view of a diametrically compressible locking ring for positively keeping the coupling as a whole in its assembled state, to be situated in the vicinity of the foremost end of the male coupling portion, and
Fig 6 shows a perspective view of an alternative embodiment of a locking arrangement.

### Description of preferred embodiments

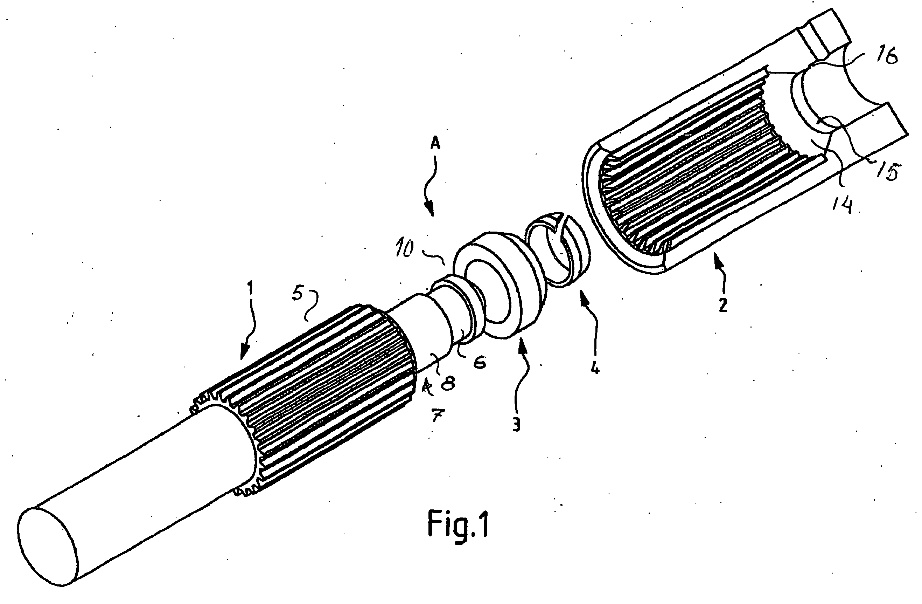

Referring now to the accompanying drawings, Fig 1 shows a complete coupling unit A of one embodiment of the invention as an exploded view. As viewed on the drawing a leftmost portion constitutes a male portion 1 (shaft) of the coupling. The male portion is here an end portion of a steering column of a car. Said male portion 1 will be further described below. Between the male portion 1 and its corresponding female portion 2 (socket), two further portions, namely an elastic and/or flexible ring 3 and a locking ring 4 are located. The assembly, location as well as the function of the parts or portions is described below.

Fig 2, which is a perspective view of the male portion 1 and which more clearly shows the same as being an end part of a shaft emanating from for instance a steering column of a car. The male portion 1 comprise an outer splines section 5, while it, as shown from fig 2, the foremost right end, after said splines section 5, in a consecutive fashion comprise from left to right an outside cylindrical shoulder 8, a groove 6 and a chamfered tip 10. It should also be noted that each outer tip 11 (rightmost in Fig 2) of the elements in the splines 5 is pointed. By the location of the groove 6 and thereby the joint between the shaft portions close to the end of the male portion, as discussed above, no rotative torque will ever be transmitted through said joint. This is due to that all the torque is transmitted via the splines of the shaft portions. Said torque will thereby have no dimensioning effect on the joint, whereby its dimensions may be kept smaller, which inevitably will make assembly easier and also will save weight.

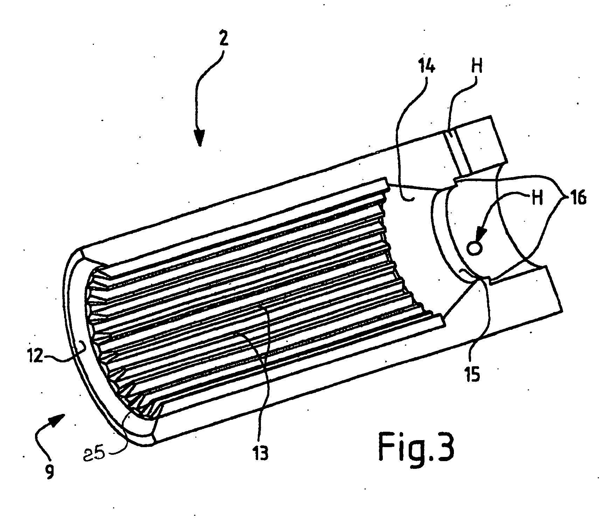

The female portion 2 is shown as a cut perspective view in Fig 3. As oriented therein its leftmost end is its penetration end 9, i.e. where the male portion 1 is to penetrate the same. Said end 9 comprise a conically shaped entry 12 in which the initial portion of inner splines 13, following thereafter, has a more or less conform shape to the pointed shape of the outer splines tips 11 of the male portion 1 counterpart, i.e. each outer tip 25 of the inner splines 13 is pointed. At the rightmost end of the splines 13, the female portion transforms into a chamfered or frusto conical throat section 14 ending with a neck 15, which in turn leads to a shoulder 16. As seen along the axis of the female portion 2, close to the shoulder 16, the portion 2, being a hollow shaft, is in radial direction to said axis penetrated threefold by holes H with a partition of 120°.

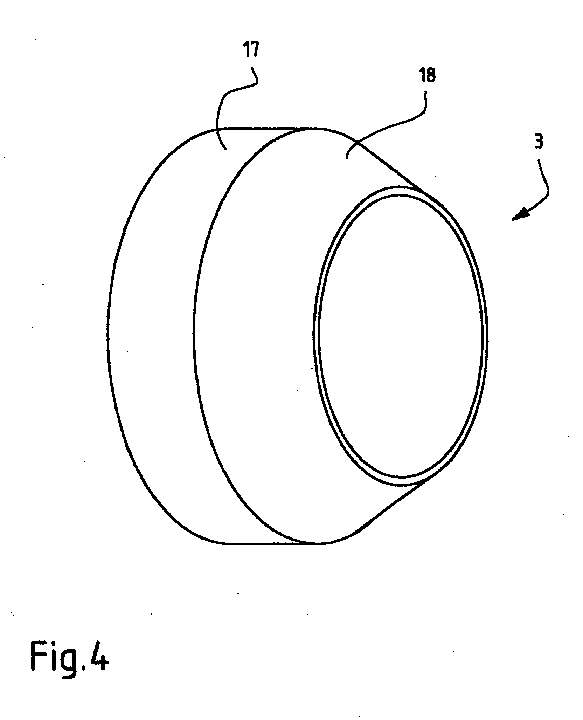

The flexible or elastic ring 3 is in Fig 4 depicted in an enlarged perspective view. In the assembled form of the coupling, said ring 3 is to be sandwiched between the male and female portions 1 and 2, respectively, supported on the one hand by the shoulder 8 of the male portion 1 and on the other by the throat section 14 of the female portion 2. The ring 3 partly has a hollow cylindrical form, (in leftmost portion of Fig 4) at 17, and partly a hollow frusto conical or chamfered form, (in rightmost portion of Fig 4) at 18, which shape not fully corresponds to the space between the abovementioned male and female portions 1 and 2 respectively, in their assembled form, since the ring 3 requires some extra space for its deformation during forced or positive assembly of the coupling. The inner shape of the ring 3 has a suitable tolerance close to forced fit set in relation to its shaft.

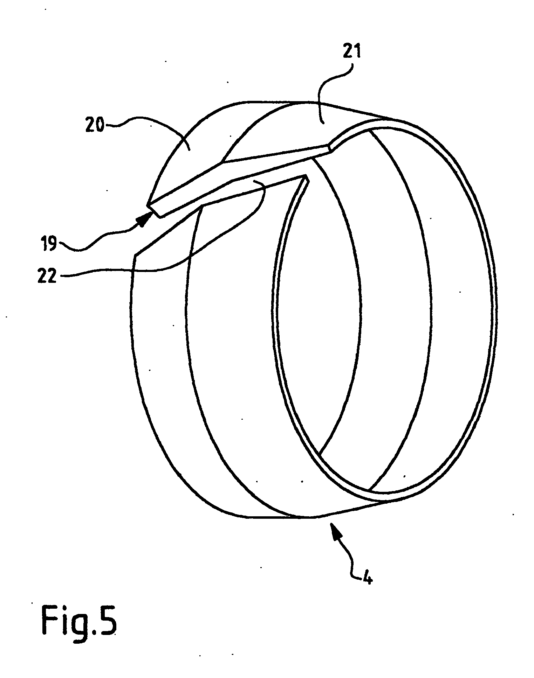

In Fig 5 locking means in the form of a ring 4 for positively keeping an assembled coupling together, is shown. Said ring 4 is preferably made from spring steel, however, other materials such as a plastic possessing adequate properties may also be used. Like the flexible ring 3, shown in Fig 4, the outside of the locking ring 4 in part has a hollow cylindrical form, (in leftmost portion of Fig 5) at 20 where also its locking edge 19 is situated, and in part a hollow frusto conical form, (in rightmost portion of Fig 5) at 21. The inside of the ring 4 is in its relaxed state cylindrical with a specific loose fit dimension (see below) in relation to that of the male portion 1 groove 6. Further the overall diametrical dimensions of the ring 4, inside as well as outside are such that due to the fact that the ring 4 is provided with a notch 22, extending obliquely or spiral wise relative to the main axis thereof, said ring 4 may be positively diametrically urged to a smaller dimension during fitting as well as in a ready state, during which conditions said ring 4 at its extreme almost fully enclose the groove 6.

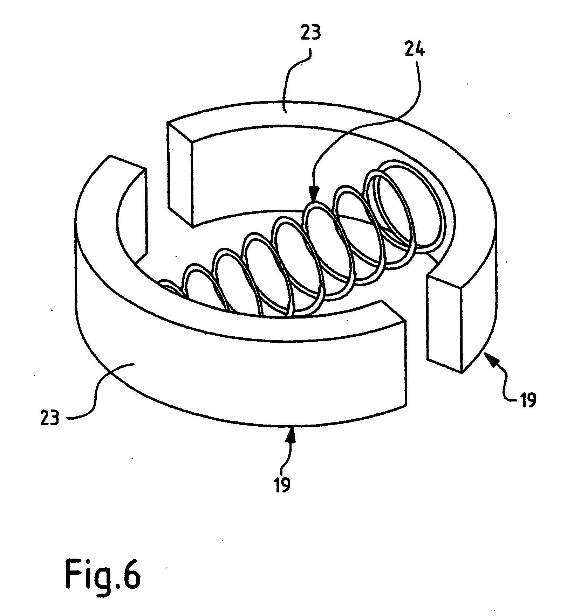

Fig 6 shows an alternative embodiment of a locking means for the same purpose as that of the ring 4 according to Fig 5. The locking means according to Fig 6 comprise two identical semi-cylindrical pieces 23, adapted to fit the groove 6 of the male portion 1 and engage the same with locking edges 19. The pieces 23 are positively urged towards a relaxed position by a spring 24, diametrically arranged between said pieces 23. The spring 24 must for obvious reasons be arranged in a through hole (not shown) of the male portion 1.

As is best seen in Fig 1 the different parts of the steering shaft coupling according to the embodiment shown is supposed to interact as follows. Before fitting the male portion1 in its counterpart, the elastic ring 3 is fitted to rest against the shoulder 8 of the male portion 1. The ring 3 may be forced into its position on the shaft end by making use of diametrical elasticity in the ring 3. Thereafter the locking ring 4 as depicted in Fig 5 or possibly an arrangement of semi cylindrical pieces 23 and a spring 24 as depicted in Fig 6, is positively fitted to the end of the male portion 1, more precisely to the groove 6.
Thereafter the female portion 2 is penetrated by the male portion 1 under a slight axial pressure, whereupon the locking ring 4 or the cylindrical pieces 23 with its respective locking edges 19 are supposed to attain a locked position in cooperation with the shoulder 16 of the female portion. The applied axial pressure has to be large enough to elastically deform the elastic or flexible ring 3 to such an extent that the locking ring 4 or the semi-cylindrical pieces 23 may pass the throat section 14 as well as the neck 15 of the female portion 2, whereby the element/-s in question with its locking edges 19 enters into a locking engagement with the shoulder 16 of the female portion 2.
In connection with the above description of the male portion 1 as well as the female portion 2 and the elastic or flexible ring 3, it is mentioned that these parts each comprise at least one conical, frusto conical and/or chamfered surface or portion. Regarding the male portion 1, the chamfered tip portion 10 at the very end thereof (the rightmost end according to Fig 2) is supposed to aid the initial insertion of the male portion 1 into the corresponding female portion 2. Having been aided by said chamfer 10, each tip 11 of the elements of the splines 5 to be further inserted are as mentioned above pointed. This feature aids the further insertion by eliminating the risk that the end of the splines 5 climbs on the ends of its counterpart (a position top-on-top), the inner splines 13.
Regarding the female portion 2, its chamfered portion 14 is supposed to establish a support surface for taking up axial as well as radial forces due to play between the splines elements of the male and female portions to thereby minimize the risk of generating unnecessary noise which could impede the quality feeling of the product as a whole. The chamfered part 14 of the female portion 2 counteracts with the chamfered portion at 18 of the elastic or flexible ring 3 to, when this ring deforms uniformly, elastically bias the coupling, whereby no noise even due to surrounding vibrations is escalated.
Regarding the locking ring 4 according to Fig 5, which also comprise a frusto conical or chamfered portion at 21. This chamfer is used to facilitate the deformation of the ring 4 while it passes the throat and neck portions 14 and 15 respectively of the female portion 2.
Regarding a future possible disassembly of the coupling A, the female portion 2 comprises the above-mentioned holes H. A specially designed tool (not shown) is used for this purpose, which tool employs three movable fingers to be inserted through said holes for uniformly deforming the locking ring to such an extent that it becomes possible to withdraw the male portion from its mating female counterpart, to thereby detach the coupling unit A.
The invention shall not be delimited by the description given above, it is instead to be understood that the invention should cover all subject matter defined by the enclosed claims.

### List of details:

- 1.: male portion
- 2: female portion
- 3.: elastic or flexible ring
- 4.: locking ring
- 5.: splines portion of male port.
- 6.: groove
- 7.: foremost end of male portion
- 8.: shoulder
- 9.: penetration end of female portion
- 10: chamfered tip
- 11: tips of splines
- 12.: conically shaped entry
- 13.: inner splines
- 14.: chamfered or frusto conical throat section
- 15.: neck
- 16: shoulder
- 17.: hollow cylindrical portion of ring
- 18: frusto conical portion of flexible ring 3
- 19: locking edge of ring 4
- 20: leftmost portion of locking ring, in Fig 5
- 21: rightmost portion of locking ring in Fig 5
- 22.: notch
- 23: semi-cylindrical pieces
- 24.: spring
"A". coupling unit
"H." holes at 120° partition

## Claims

1. A shaft coupling (A) between a first shaft section (1) and a second shaft section (2), which when in an operative position, are oriented along a common longitudinal axis, and wherein said first and second shaft sections (1, 2) comprise inner and/or outer splines or other serration (5, 13) respectively for the interconnection of said first and second shafts sections (1, 2) respectively, whereby one of said, either the first or the second, shaft sections (1, 2) having an outer splines or serration (male portion) in a portion thereof to be inserted into a mating inner splines or serration (female portion) of the other shaft section is provided with a groove (6) for the fitting of a radially elastically deformable locking arrangement (4; 23, 24) for, upon insertion thereof into the female portion, co-operating with a corresponding radially extending groove or shoulder (16) arranged in the latter, **characterized in that** a vibration damping elastic or flexible ring (3) is applied to a rearmost end of a diameter reducing foremost end (7) of said male portion (1), that said ring (3) is oriented or sandwiched between a shoulder (8), arranged on the male portion (1), and a throat section (14) of the female portion (2) in order to, in respect of vibrations, isolate said two shaft sections from each other and **in that** said flexible ring is conically shaped at its foremost peripheral surface in order to, under bias, be able to carry both radial and axial loads from a corresponding throat section (14) surface in the female portion.

2. Shaft coupling according to claim 1, **characterized by** said locking arrangement having a form of an elastically deformable locking ring (4), formed in one single piece.

3. Shaft coupling according to claim 1 or 2, **characterized by** said locking arrangement having a form of two half-moon shaped or partially circular rings (23), being biased by a spring means (24) therebetween, arranged in a diameter through a hole (H) at a bottom of a female portion groove (16).

4. Shaft coupling according to anyone of the preceding claims 1 to 3, **characterized in that** said groove is circular (6) and is arranged within said diameter reducing foremost end section (7) of said male portion (1).

5. Shaft coupling according to claim 4, **characterized in that** the end of said foremost end section (7) of said male portion (1) is formed as a chamfered top (10).

6. Shaft coupling according to anyone of the preceding claims, **characterized in that** each outer tip (11) of the splines or serrations (5) on the male portion (1) is pointed.

7. Shaft coupling according to anyone of the preceding claims, **characterized in that** an entry region (9) of said female portion (2) is slightly chamfered (12), and that each outer tip (25) of the splines or serrations (13) of the female portion (2) is pointed.

8. Shaft coupling according to claim 5, **characterized in that** the locking ring is conically shaped.

## Patentansprüche

1. Wellenkupplung (A) zwischen einem ersten Wellenabschnitt (1) und einem zweiten Wellenabschnitt (2), die in einer Wirkstellung längs einer gemeinsamen Längsachse ausgerichtet sind, und wobei die ersten und zweiten Wellenabschnitte (1, 2) innere und/oder äußere Keilwellennuten bzw. eine andere Kerbverzahnung (5, 13) zur gegenseitigen Verbindung der ersten bzw. zweiten Wellenabschnitte (1, 2) umfassen, wobei einer von diesen, entweder der erste oder der zweite, Wellenabschnitten (1, 2) äußere Keilwellennuten oder eine äußere Kerbverzahnung (äußerer Abschnitt) in einem Abschnitt davon, welche in korrespondierende innere Keilwellennuten oder eine innere Kerbverzahnung (innerer Abschnitt) des anderen Wellenabschnittes einzubringen ist, aufweist, mit einer Nut (6) zur Befestigung einer radial elastisch verformbaren Verschlussanordnung (4; 23, 24) zum Zusammenwirken mit einer korrespondierenden, sich radial erstreckenden Nut oder Schulter (16) nach dessen Einbringung in den inneren Abschnitt, welche an letzterem angeordnet ist, versehen ist, **dadurch gekennzeichnet, dass** ein vibrationsdämpfender elastischer oder flexibler Ring (3) an einem hintersten Ende eines sich im Durchmesser reduzierenden vordersten Ende (7) des äußeren Abschnittes (1) angebracht ist, dass der Ring (3) zwischen einer an dem äußeren Abschnitt (1) angeordneten Schulter (8) und einem Einschnürungsabschnitt (14) des inneren Abschnittes (2) ausgerichtet oder zwischengeordnet ist, um die zwei Wellenabschnitte bei Vibrationen voneinander zu isolieren, und dass der flexible Ring an dessen vordersten Außenfläche konusförmig ist, um unter Vorspannung in der Lage zu sein, radiale und axiale Kräfte von einer korrespondierenden Oberfläche des Einschnürungsabschnittes (14) in dem inneren Abschnitt aufzunehmen.

2. Wellenkupplung nach Anspruch 1, **gekennzeichnet durch** die Verschlussanordnung, die eine Form eines elastisch verformbaren Verschlussringes (4), welcher einstückig ausgebildet ist, aufweist.

3. Wellenkupplung nach Anspruch 1 oder 2, **gekennzeichnet durch** die Verschlussanordnung, die eine Form von zwei halbmondförmigen oder teilweise kreisförmigen Ringen (23), welche durch eine Federeinrichtung (24) dazwischen vorgespannt, in einem Durchmesser **durch** eine Bohrung (H) an einem Boden einer Nut (16) des inneren Abschnittes angeordnet sind.

4. Wellenkupplung nach einem der vorhergehenden Ansprüche 1 bis 3, **dadurch gekennzeichnet, dass** die Nut (6) kreisförmig ist und in einem sich im Durchmesser reduzierenden vordersten Endabschnitt (7) des äußeren Abschnittes (1) angeordnet ist.

5. Wellenkupplung nach Anspruch 4, **dadurch gekennzeichnet, dass** das Ende des vordersten Endabschnittes (7) des äußeren Abschnittes (1) als ein abgeschrägtes Ende (10) ausgebildet ist.

6. Wellenkupplung nach einem der vorhergehenden Ansprüche, **dadurch gekennzeichnet, dass** jedes äußere Ende (11) der Keilwellennuten oder Kerbverzahnungen (5) an dem äußeren Abschnitt (1) spitz ausgebildet ist.

7. Wellenkupplung nach einem der vorhergehenden Ansprüche, **dadurch gekennzeichnet, dass** ein Eingangsbereich (9) des inneren Abschnittes (2) leicht abgeschrägt (12) ist und dass jedes äußere Ende (25) der Keilwellennuten oder Kerbverzahnungen (13) des inneren Abschnittes (2) spitz ist.

8. Wellenkupplung nach Anspruch 5, **dadurch gekennzeichnet, dass** der Verschlussring konusförmig ist.

## Revendications

1. Accouplement (A) d'arbre entre une première section (1) d'arbre et une seconde section (2) d'arbre qui, lorsqu'elles sont en position de marche, sont orientées suivant un axe longitudinal commun, et dans lequel lesdites première et seconde sections (1, 2) d'arbre comportent respectivement des cannelures ou autres stries intérieures et/ou extérieures (5, 13) pour le raccordement des première et respectivement seconde sections (1, 2) d'arbre, grâce à quoi l'une desdites sections (1, 2) d'arbre, la première ou la seconde, ayant dans une partie de celle-ci des cannelures ou stries extérieures (partie mâle) à insérer dans des cannelures ou stries intérieures d'accouplement (partie femelle) de l'autre section d'arbre, est pourvue d'une gorge (6) pour la mise en place d'un système de verrouillage (4 ; 23, 24) pouvant se déformer radialement par élasticité pour, au moment de son insertion dans la partie femelle, coopérer avec une gorge ou un épaulement radial correspondant (16) présent dans cette dernière, **caractérisé en ce qu'**une bague élastique ou flexible (3) d'amortissement de vibrations est disposée à une extrémité arrière d'une partie d'extrémité avant (7) de réduction de diamètre de ladite partie mâle (1), **en ce que** ladite bague (3) est orientée ou prise en sandwich entre un épaulement (8), présent sur la partie mâle (1), et une gorge (14) de la partie femelle (2) afin, en ce qui concerne les vibrations, d'isoler lesdites deux sections d'arbre l'une par rapport à l'autre et **en ce que** ladite bague flexible a une forme conique sur sa surface périphérique antérieure afin de pouvoir, sous l'effet d'une sollicitation, supporter des charges radiale et axiale exercées depuis une surface correspondante de gorge (14) dans la partie femelle.

2. Accouplement d'arbre selon la revendication 1, **caractérisé en ce que** ledit agencement de verrouillage se présente sous la forme d'une bague de verrouillage (4) à déformabilité élastique, réalisée d'une seule pièce.

3. Accouplement d'arbre selon la revendication 1 ou 2, **caractérisé en ce que** ledit agencement de verrouillage se présente sous la forme de deux bagues (23) en demi-lunes ou partiellement circulaires, sollicitées par un moyen formant ressort (24) entre elles, disposé suivant un diamètre passant par un trou (H) au fond d'une gorge (16) de la partie femelle.

4. Accouplement d'arbre selon l'une quelconque des revendications précédentes 1 à 3, **caractérisé en ce que** ladite gorge (6) est circulaire et est ménagée dans ladite partie d'extrémité avant (7), de réduction de diamètre, de ladite partie mâle (1).

5. Accouplement d'arbre selon la revendication 4, **caractérisé en ce que** l'extrémité de ladite partie d'extrémité avant (7) de ladite partie mâle (1) se présente sous la forme d'un sommet chanfreiné (10).

6. Accouplement d'arbre selon l'une quelconque des revendications précédentes, **caractérisé en ce que** chaque bout extérieur (11) des cannelures ou stries (5) de la partie mâle (1) est pointu.

7. Accouplement d'arbre selon l'une quelconque des revendications précédentes, **caractérisé en ce qu'**une zone d'entrée (9) de ladite partie femelle (2) est légèrement chanfreinée (12) et **en ce que** chaque bout extérieur (25) des cannelures ou stries (13) de la partie femelle (2) est pointu.

8. Accouplement d'arbre selon la revendication 5, **caractérisé en ce que** la bague de verrouillage a une forme conique.
